# EUROPEAN PATENT APPLICATION

(11) **EP 3 373 672 A1**
(43) Date of publication of application: **12.09.2018**
(21) Application number: 16862189.4
(22) Date of filing: 04.11.2016
(51) Int. Cl.: H04W 72/02, H04W 72/04

(54) **USER TERMINAL, RADIO BASE STATION AND RADIO COMMUNICATION METHOD**

(30) Priority: 05.11.2015 JP 2015218000
(71) Applicant: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP); MU, Qin, Beijing 100190 (CN)
(74) Representative: Hoffmann Eitle
(86) International application number: PCT/JP2016/082773
(87) International publication number: WO 2017/078129

(57) **Abstract**

The present invention is designed so that the overhead of communication can be reduced even when the band for use is limited to a narrower band than the minimum system bandwidth in existing LTE systems. A user terminal has a transmitting/receiving section that transmits and receives signals to and from a radio base station based on a pattern that is comprised of a plurality of radio resources, and a control section that determines the pattern from a plurality of patterns based on user terminal-specific information.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (referred to as, for example, "LTE-A" (LTE-Advanced), "FRA" (Future Radio Access), "4G," "5G," and so on) are under study for the purpose of achieving further broadbandization and increased speed beyond LTE.

Now, accompanying the cost reduction of communication devices in recent years, active development is in progress in the field of technology related to machine-to-machine communication (M2M) to implement automatic control of network-connected devices and allow these devices to communicate with each other without involving people. In particular, 3GPP (3rd Generation Partnership Project) is promoting the standardization of MTC (Machine-Type Communication) for cellular systems for machine-to-machine communication, among all M2M technologies (see non-patent literature 2). User terminals for MTC (MTC UE (User Equipment)) are being studied for use in a wide range of fields such as, for example, electric meters, gas meters, vending machines, vehicles and other industrial equipment.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, in MTC, user terminals for MTC (LC (Low-Cost) MTC UEs) that can be implemented in simple hardware structures have been increasingly in demand. For these LC-MTC UEs, a communication scheme to allow LTE communication in a very narrow band is under study (which may be referred to as, for example, "NB-IoT" (Narrow Band Internet of Things), "NB-LTE" (Narrow Band LTE)," "NB cellular IoT" (Narrow Band cellular Internet of Things), "clean slate," and so on). Note that "NB-IoT" mentioned hereinafter will include above "NB-LTE," "NB cellular IoT," "clean slate" and so on.

User terminals that communicate in NB-IoT (hereinafter referred to as "NB-IoT terminals") are under study as user terminals having the functions to transmit/receive in a narrower band (for example, 180 kHz) than the minimum system bandwidth (1.4 MHz) that is supported in existing LTE systems.

Such NB-IoT terminals are required to reduce unnecessary signals transmission and reception, of and reduce power consumption. However, when the transmission and reception techniques of existing system are applied to NB-IoT terminals that are limited to using a narrower band than the minimum system bandwidth of existing LTE systems as the band for their use, there is a possibility that, due to bandwidth limitation, it takes time to transmit and receive control information and data, resulting in an increase in power consumption.

The present invention has been made in view of the above, and it is therefore an object of the present invention to provide a user terminal, a radio base station and a radio communication method, whereby the overhead of communication can be reduced even when the band for use is limited to a narrower band than the minimum system bandwidth in existing LTE systems.

### Solution to Problem

According to one aspect of the present invention, a user terminal has a transmitting/receiving section that transmits and receives signals to and from a radio base station based on a pattern that is comprised of a plurality of radio resources, and a control section that determines the pattern from a plurality of patterns based on user terminal-specific information.

### Advantageous Effects of Invention

According to the present invention, the overhead of communication can be reduced even when the band for use is limited to a narrower band than the minimum system bandwidth in existing LTE systems.

### Brief Description of Drawings

FIG. 1 is a diagram to explain the band for use for NB-IoT terminals;
FIG. 2 is a diagram to illustrate the arrangement of resource pools (patterns) according to a first example;
FIG. 3 is a diagram to illustrate the arrangement of resource pools according to a second example;
FIG. 4 is a diagram to illustrate the relationship between DCI and a downlink shared data channel in the pattern arrangement according to the second example;
FIG. 5A to FIG. 5C provide diagrams to explain the specification of the number of subframes according to a third example;
FIG. 6 is a diagram to illustrate the arrangement of resource pools (patterns) according to a fourth example;
FIG. 7 is a diagram to explain the specification of narrower bands according to a fifth example;
FIG. 8 is a diagram to illustrate a schematic structure of a radio communication system according to an embodiment of the present invention;
FIG. 9 is a diagram to illustrate an example of overall structure of a radio base station according to one embodiment;
FIG. 10 is a diagram to illustrate an example of a functional structure of a radio base station according to one embodiment;
FIG. 11 is a diagram to illustrate an example of an overall structure of a user terminal according to the present embodiment;
FIG. 12 is a diagram to illustrate an example of a functional structure of a user terminal according to the present embodiment; and
FIG. 13 is a diagram to illustrate an example hardware structure of a radio base station and a user terminal according to one embodiment.

### Description of Embodiments

Studies are in progress to simplify the hardware structures of NB-IoT terminals at the risk of lowering their processing capabilities. For example, studies are in progress to apply limitations to NB-IoT terminals, in comparison to existing user terminals (LTE terminals), by, for example, lowering the peak rate, limiting the transport block size (TBS), limiting the resource blocks (also referred to as "RBs," "PRBs" (Physical Resource Blocks) and so on), limiting the RFs (Radio Frequencies) to receive, and so on.

Unlike existing user terminals, in which the system band (for example, 20 MHz (100 PRBs), one component carrier, etc.) is configured as the upper limit band for use, the upper limit band for use for NB-IoT terminals is limited to a predetermined narrow band (for example, 180 kHz, 1 PRB, 1.4 MHz, etc.). Studies are in progress to run such band-limited NB-IoT terminals in LTE/LTE-A system bands, considering the relationship with existing user terminals.

For example, LTE/LTE-A system bands may support frequency-multiplexing of band-limited NB-IoT terminals and band-unlimited existing user terminals. Consequently, NB-IoT terminals may be seen as terminals, in which the maximum band they support is the same band as, or is a partial narrow band in, the minimum system band (for example, 1.4 MHz) supported in existing LTE, or may be seen as terminals which have the functions for transmitting/receiving in the same band as the minimum system band (for example, 1.4 MHz) supported in LTE/LTE-A, or in a narrower band than this minimum system band.

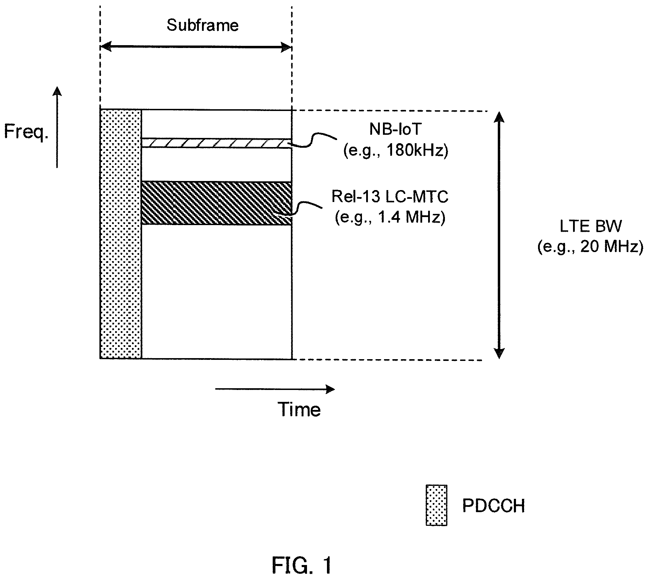

FIG. 1 is a diagram to illustrate an example of the arrangement of a narrow band in a system band. In FIG. 1, a predetermined narrow band (for example, 180 kHz), which is narrower than the minimum system band (1.4 MHz) in LTE systems, is configured in a portion of a system band. This narrow band is a frequency band that can be detected by NB-IoT terminals. Note that the minimum system band (1.4 MHz) for LTE systems is also the band for use in LC-MTC in LTE Rel. 13.

Note that it is preferable to employ a structure, in which the frequency location of the narrow band that serves as the band for use by NB-IoT terminals can be changed within the system band. For example, NB-IoT terminals should preferably communicate by using different frequency resources per predetermined period (for example, per subframe). By this means, it is possible to achieve traffic offloading for NB-IoT terminals, achieve a frequency diversity effect, and reduce the decrease of spectral efficiency. Consequently, considering the application of frequency hopping, frequency scheduling and so on, NB-IoT terminals should preferably have an RF re-tuning function.

Note that different frequency bands may be used between the narrow band to use in downlink transmission/reception (DL NB: Downlink Narrow Band) and the narrow band to use in uplink transmission/reception (UL NB: Uplink Narrow Band). Also, the DL NB may be referred to as the "downlink narrow band," and the UL NB may be referred to as the "uplink narrow band."

NB-IoT terminals receive downlink control information (DCI) by using a downlink control signal (downlink control channel) that is placed in a narrow band, and this downlink control signal may be referred to as an "EPDCCH" (Enhanced Physical Downlink Control CHannel), may be referred to as an "M-PDCCH" (MTC PDCCH), or may be referred to as an "NB-PDCCH."

Also, NB-IoT terminals receive downlink data by using a downlink data signal (downlink shared channel) that is placed in a narrow band, and this downlink data signal may be referred to as a "PDSCH" (Physical Downlink Shared CHannel), may be referred to as an "M-PDSCH" (MTC PDSCH), or may be referred to as an "NB-PDSCH."

Also, an uplink control signal (uplink control channel) (for example, a PUCCH (Physical Uplink Control CHannel)) and an uplink data signal (uplink shared channel) (for example, a PUSCH (Physical Uplink Shared CHannel)) for NB-IoT terminals may be referred to as an "M-PUCCH" (MTC PUCCH), an "M-PUSCH" (MTC PUSCH), and an "NB-PUSCH," respectively. The above channels are by no means limiting, and any channel that is used by NB-IoT terminals may be represented by affixing an "M," which stands for MTC, an "N," which stands for NB-IoT, or an "NB," to a conventional channel used for the same purpose.

Also, it is possible to provide SIBs (System Information Blocks) for NB-IoT UEs, and these SIBs may be referred to as "MTC-SIBs," "NB-SIBs," and so on.

Now, in NB-IoT, a study is in progress to use repetitious transmission/receipt, in which the same downlink signal and/or uplink signal are transmitted/received in repetitions over a plurality of subframes, for enhanced coverage. Note that the number of a plurality of subframes in which the same downlink signal and/or uplink signal are transmitted and received is also referred to as "the number of repetitions" (or "repetition number"). Also, the number of repetitions may be represented by the repetition level. This repetition level is also referred to as the "coverage enhancement (CE) level."

In NB-IoT terminals whose band for use is limited to the same or a narrower band (bandwidth reduced) than the minimum system bandwidth in existing LTE systems as described above, it is preferable to reduce the overhead of downlink control information (DCI), including downlink data signal modulation and coding schemes (MCS: Modulation and Coding Scheme) and higher layer signaling (for example, RRC (Radio Resource Control) and broadcast information), in order to improve the spectral efficiency. So, the present inventors have focused on arranging a plurality of resource pools (patterns) and determining the resource pool to use for transmission/reception from the plurality of resource pools, and have arrived at the present invention.

Now, the radio communication method according to an embodiment of the present invention will be described. Although the following embodiments will be described assuming that the band for use for NB-IoT terminals is limited to a band of 180 kHz (one resource block (PRB)), which is narrower than the minimum system bandwidth (1.4 MHz) of existing LTE systems, the application of the present invention is not limited to this. For example, the following embodiments are equally applicable to NB-IoT terminals limited to the same band as the minimum system bandwidth (1.4 MHz) of existing LTE systems, and NB-IoT terminals limited to using a narrower band than 180 kHz.

### (First Example)

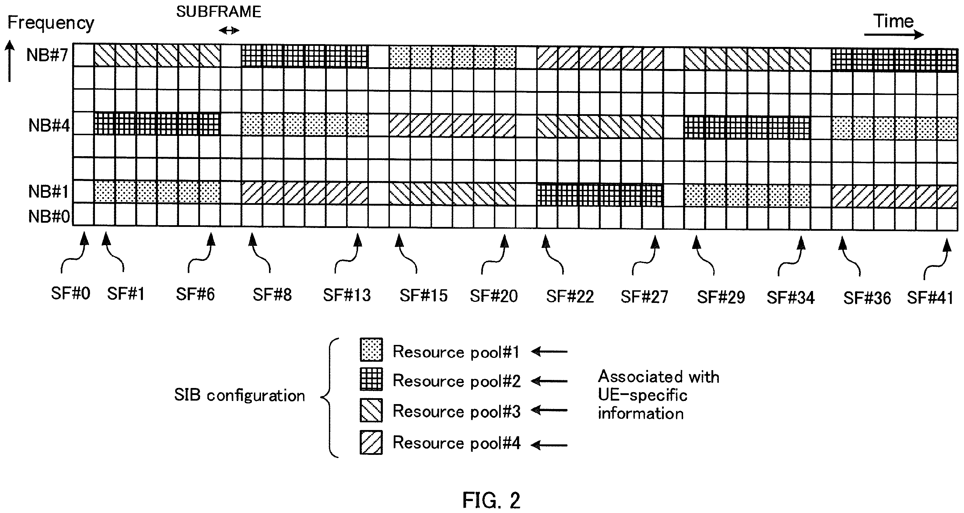

First, the first example will be described with reference to FIG. 2. FIG. 2 is a diagram illustrating a state in which a plurality of resource pools (patterns) for use for uplink/downlink transmission are arranged. Here, four resource pools (resource pools #1 to #4) allocated to the same cell are arranged. Each resource pool can allocate radio resources for at least one of a downlink control channel, a downlink shared data channel, and an uplink shared data channel.

To be more specific, resource pool #1 is comprised of subframe SF #1 to SF #6 of narrower band NB #1, subframe SF #8 to SF #13 of narrower band NB #4, subframe SF #15 to SF #20 of narrower band NB #7, subframe SF #29 to SF #34 of narrower band NB #1, and subframe SF #36 to SF #41 of narrower band NB #4.

Also, resource pool #2 is comprised of subframe SF #1 to SF #6 of narrower band NB #4, subframe SF #8 to SF #13 of narrower band NB #7, subframe SF #22 to SF #27 of narrower band NB #1, subframe SF #29 to SF #34 of narrower band NB #4, and subframe SF #36 to SF #41 of narrower band NB #7.

Resource pool #3 is comprised of subframe SF #1 to SF #6 of narrower band NB #7, subframe SF #15 to SF #20 of narrower band NB #1, subframe SF #22 to SF #27 of narrower band NB #4, subframe SF #29 to SF #34 of narrower band NB #4, and subframe SF #36 to SF #41 of narrower band NB #7.

Resource pool #4 is comprised of subframe SF #8 to SF #13 of narrower band NB #1, subframe SF #15 to SF #20 of narrower band NB #4, subframe SF #22 to SF #27 of narrower band NB #7, and subframe SF #36 to SF #41 of narrower band NB #1.

In each of resource pools #1 to #4, a group of radio resources continuous for a certain period (a set of 6 PRBs of radio resources in FIG. 2) frequency-hop between different narrow bands (narrow bands NB #1, NB #4 and NB #7 in FIG. 2). The above groups may be frequency-hopped between different narrow bands at a predetermined cycle (in a 7-subframe cycle in FIG. 2). Here, the case where the same resource pool is allocated consecutively to six subframes is illustrated, but the present invention is not limited to this. The narrow band of the resource pool may be different for each subframe. Furthermore, the resource pool may not be arranged in a given period. For example, in FIG. 2, resource pool #1 is not allocated to any radio resource in the period of subframes SF #21 to #27. Further, in FIG. 2, since the transmission/reception signals are switched, 1 PRB that does not belong to any group is set between the groups(for example, subframe SF #7 of narrow band NB #1, which is located between resource pools #1 and #2).

In the state where above resource pools #1 to #4 are arranged, first, the radio base station forming the cell reports the arrangement of resource pools #1 to #4 to an NB-IoT terminal as cell-specific information. The NB-IoT terminal determines the arrangement of resource pools #1 to #4 from the received cell-specific information.

For example, the radio base station, can report (configure) the arrangement of resource pools #1 to #4 in SIBs (System Information Blocks). In this case, the arrangement of resource pools #1 to #4 can be reported by the broadcast signal. For example, it is possible to report the arrangement of resource pools #1 to #4 by using radio resources that all the NB-IoT terminals communicating with the radio base station constituting the cell can receive in common. Here, the arrangement of resource pools #1 to #4 may include at least information about the resource blocks used for the resource pools. Alternatively, the arrangement of resource pools #1 to #4 may be associated with cell IDs (identification) or subframe numbers. Furthermore, it is not necessary to use only one of SIBs, cell IDs and subframe numbers, and it is equally possible to combine at least two of these, so that resource pools #1 to #4 can be linked therewith and reported to NB-IoT terminals.

Next, based on the UE-specific information, an NB-IoT terminal determines (specifies or detects) the resource pool corresponding to the subject terminal from resource pools #1 to #4. For the UE-specific information, for example, random access channel resources and UE IDs (User Equipment Identification), which are UE-specific parameters, can be used. In other words, resource pools #1 to #4 are each associated with UE-specific information.

For the random access channel resources, PRACH (Physical Random Access CHannel) resources may be used. Furthermore, such PRACH resources may employ so-called sequences as code resources, employ the time or subframes that identify resources, or combine these.

As described above, according to this first example, when the radio resources allocated to an NB-IoT terminal are reported, the individual higher layer signaling and the overhead of downlink control information (DCI) for the NB-IoT terminal can be reduced. For example, it is possible to omit allocating UE-specific radio resources (PRBs) for frequency hopping, or omit specifying RBs(narrow bands) in DCI.

Further, it is possible to omit reporting the arrangement of resource pools #1 to #4 by using the above cell-specific information, and, instead, specify the arrangement of resource pools corresponding to the subject terminal from the UE-specific information.

Also, in the same resource pool, frequency hopping may be possible. In this case, for example, one bit of downlink control information may be used to report the presence or absence of frequency hopping to an NB-IoT terminal.

Also, in FIG. 2, three bandwidths reduced are used for four resource pools, but the present invention is not limited thereto. In order to gain sufficient frequency diversity, for example, the number of resource pools and the number of narrow bands used in these resource pools may be made the same. In such a case, sufficient frequency diversity is secured, and appropriate transmission and reception are realized.

In addition, when RACH sequences are used as UE-specific information, it is possible that the number of NB-IoT terminals allocated to each resource pool is biased. In such a case, the radio base station preferably controls to allocate a predetermined number of NB-IoT terminals to other resource pools. For example, the resource pool index may be shifted by "I" between the radio base station and a predetermined number of NB-IoT terminals.

When shifting the resource pool index, offset information (pattern offset information) can be used. For example, when the 1-bit offset information is "1," the resource pool index may be increased by 1, and, when the 1-bit offset information is "0," the resource pool index may be maintained as it is. By using the offset information in this way, it is possible to dynamically change the resource pool with a small amount of information.

Also, the amount of shift is not limited to 1, and may be 2 or 3. Alternatively, the amount of shift may be designated by higher layer signaling.

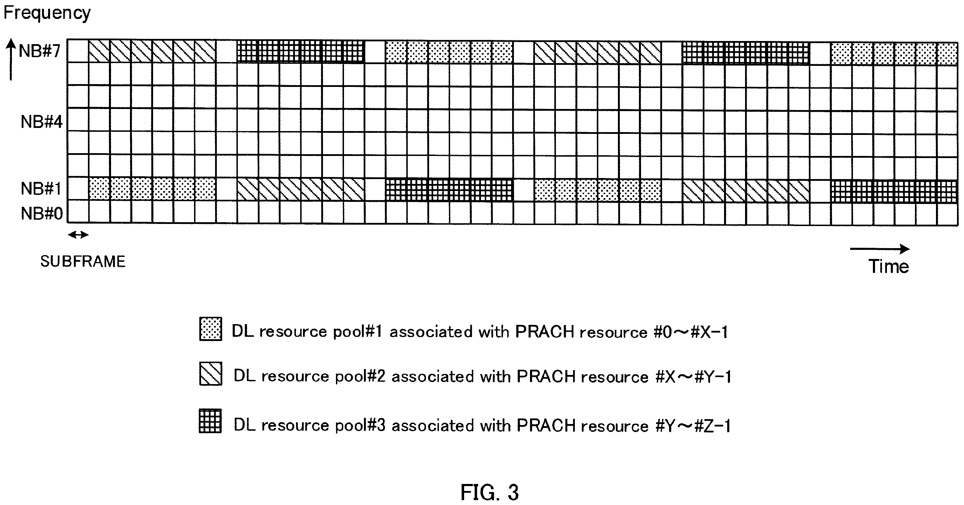

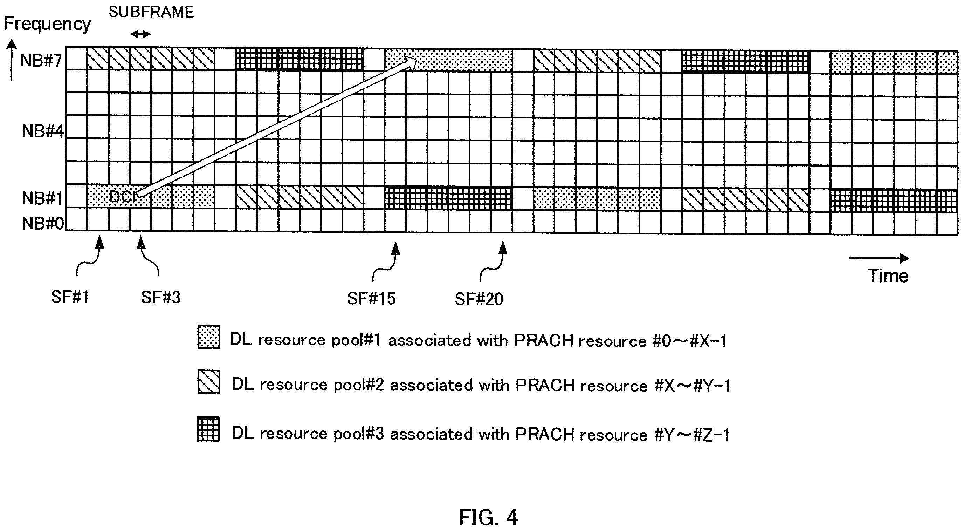

(Second Example) Next, a second example will be described with reference to FIG. 3 and FIG. 4. The second example relates to downlink transmission, and as illustrated in FIG. 3, a plurality of resource pools (patterns) for use for downlink transmission are arranged. Here, three DL resource pools (DL resource pools #1 to #3) allocated to the same cell are arranged. In each resource pool, radio resources of at least one of a downlink control channel (for example, M-PDCCH) and a downlink shared data channel can be allocated.

To be more specific, DL resource pool #1 is comprised of subframe SF #1 to SF #6 of narrower band NB #1, subframe SF #15 to SF #20 of narrower band NB #7, subframe SF #22 to SF #27 of narrower band NB #1 and subframe SF #36 to SF #41 of narrower band NB #7.

Also, DL resource pool #2 is comprised of subframe SF #1 to SF #6 of narrower band NB #7, subframe SF #8 to SF #13 of narrower band NB #81, subframe SF #22 to SF #27 of narrower band NB #7 and subframe SF #29 to SF #34 of narrower band NB #1.

Also, DL resource pool #3 is comprised of subframe SF #8 to SF #13 of narrower band NB #7, subframe SF #15 to SF #20 of narrower band NB #1, subframe SF #29 to SF #34 of narrower band NB #7 and subframe SF #36 to SF #41 of narrower band NB #1.

The arrangement of above DL resource pools #1 to #3 is reported from the radio base station to an NB-IoT terminal by using cell-specific information, as in the above-described first example. For example, the arrangement of resource pools #1 to #4 may be reported (configured) in an SIB (System Information Block), or the arrangement of resource pools #1 to #4 may be associated with cell IDs (identification) and subframe numbers. Furthermore, it is not necessary to use only one of SIBs, cell IDs and subframe numbers, and it is equally possible to combine at least two of these, so that resource pools #1 to #4 can be linked therewith and reported to NB-IoT terminals. As a result, the NB-IoT terminal can specify the arrangement of DL resource pools #1 to #3 based on cell-specific information.

Similarly to the first example, each of DL resource pools #1 to #3 is associated with the UE-specific information. In FIG. 3, PRACH resources are used as UE-specific information. To be more specific, DL resource pool #1 is associated with PRACH resources # 0 to #X-1, DL resource pool #2 is associated with PRACH resources #X to #Y-1, DL resource pool #3 is associated with PRACH resources #Y to # Z-1. By this means, the NB-IoT terminal can determine (identify, detect) the DL resource pool to which the subject terminal belongs from the UE-specific information. Note that, as has been explained with the first example, PRACH resources may employ so-called sequences as code resources, employ the time or subframes that identify resources, or combine these.

FIG. 4 is a diagram to explaining a specific example of the case where a NB-IoT terminal uses PRACH resource # 0 in FIG. 3. By using PRACH resource # 0, the NB-IoT terminal determines (identifies, detects) that the DL resource pool allocated to the subject terminal is DL resource pool #1. Therefore, the NB-IoT terminal monitors DL resource pool #1, and, when, for example, downlink control information (DCI) is allocated to subframes SF #1 to #3 of narrowband #1 as illustrated in FIG. 4, demodulates this DCI.

In the DCI, the downlink data signal modulation and coding scheme (MCS: Modulation and Coding Scheme) and the transport block size (TBS) are specified. As resource allocation information, the number of subframes to which the TBS is mapped and the subframe location may be designated. Alternatively, the repetition number, which indicates the number of a plurality of subframes to which the same downlink signal is allocated, may be designated. For example, when one bit of DCI is used and this bit is "1," this may indicate that the same downlink signal is allocated over a plurality of subframes, and, when this bit is "0," this may indicate that no repetition is made.

In FIG. 4, the DCI indicates that the data signal allocated to the downlink shared data channel is transmitted in subframes SFs #15 to 20 of narrowband NB #7. Therefore, the NB-IoT terminal can demodulate the data signal allocated to subframes SF #15 to 20 of narrowband NB #7.

In this second example, since PRACH resources (sequences) are used as UE-specific information, it is possible that the number of NB-IoT terminals allocated to each resource pool in the cell may be biased. Therefore, as in the first example described above, the DL source pools may be dynamically changed using offset information.

For example, if the DL resource pool index is incremented by "1" in the DCI illustrated in FIG. 4, the NB-IoT terminal can receive the signal of the downlink shared data channel in subframes SF #22 to #27 of narrow band NB #7 belonging to DL resource pool #2.

Also, as in the first example, frequency hopping may be made possible in the same DL resource pool. In this case, for example, one bit of the downlink control information may be used to notify the NB-IoT terminal of the presence or absence of frequency hopping.

As described above, according to the second example, the amount of downlink resource allocation information can be reduced, and the overhead of downlink transmission can be reduced.

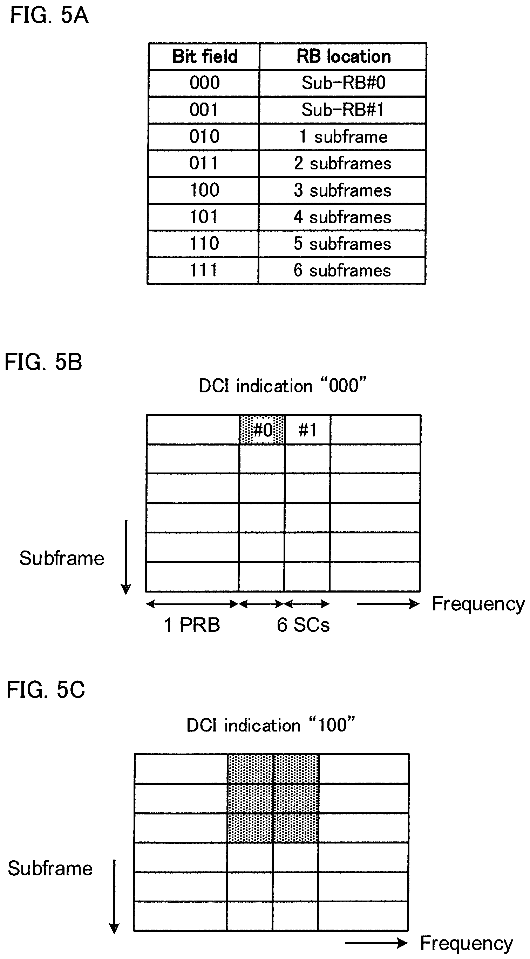

(Third Example) Next, a third embodiment will be described with reference to FIG. 5. The third example relates to downlink transmission, and, in particular, performs DL resource allocation for a single TBS in a frequency band that is narrower than 1 PRB (Physical Resource Block). In other words, this is a technology to support downlink transmission of smaller granularity than 1 PRB.

FIG. 5A illustrates an example in which resource block allocation is defined by 3 bits of downlink control information (DCI). The resource block allocation represented in 3 bits basically illustrates how many subframes are allocated from the beginning. For example, when DCI indicates "000," one of the two 6-subcarrier parts, into which 1 PRB is divided (in FIG. 5B, sub-resource blocks # 0 of the lower frequency), is allocated. Also, when the DCI indicates "001," the other sub-resource block #1 is allocated.

In the third example, when allocating a plurality of subframes, allocation is performed in 1-PRB units. Therefore, for example, when DCI indicates "100," as illustrated in FIG. 5C, three subframes from the beginning of 1 PRB of 12 subcarriers are allocated.

As described above, according to the third example, it is possible to perform DL resource allocation in a narrower frequency band than 1 PRB (Physical Resource Block). Therefore, it is possible to support resource allocation in a band that is even narrower than 180 kHz, 1 PRB, and the like, for example.

### (Fourth Example)

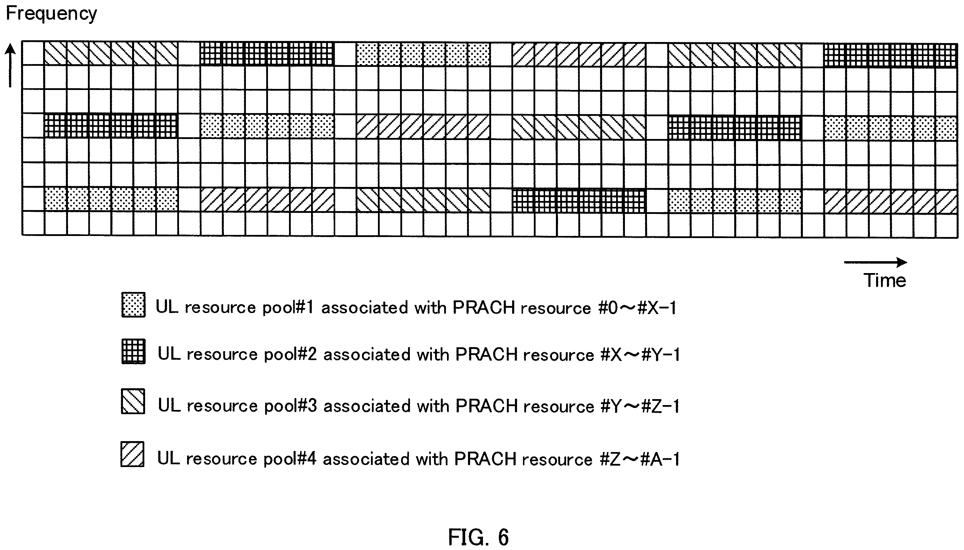

Next, a fourth embodiment will be described with reference to FIG. 6. The fourth example relates to uplink transmission, and as illustrated in FIG. 6, a plurality of resource pools (patterns) for use in uplink transmission are arranged. Here, four UL resource pools (UL resource pools #1 to #4) allocated to the same cell are arranged. In each resource pool, radio resources for an uplink shared data channel can allocated.

In this fourth example, the allocation of each UL resource pool #1 to #4 is the same as in the above-described first embodiment, and detailed description thereof will be omitted. In addition, the point that the arrangement of UL resource pools #1 to #4 is notified by using cell-specific information and the point that each UL resource pool is associated with UE-specific information are the same as in the second example, and therefore the descriptions of these will also be omitted.

In the fourth example, contention-based transmission and non-contention based transmission can be switched and applied. In contention-based transmission, even when there is no UL grant, NB-IoT terminal determines (specifies and/or detects) the UL resource pool from the UE-specific information, and autonomously transmits data. In non-contention-based transmission, transmission is made by using radio resources specified by UL grants, and radio resources that are available for transmission and that are as early as possible (for example, radio resources a predetermined period of time (4 ms) after a UL grant is received) are used. Contention-based transmission and non-contention-based transmission can be switched by using, for example, higher layer signaling (for example, RRC (Radio Resource Control) signaling or broadcast information).

In this fourth example, as in the first and second examples, the DL source pools may be dynamically changed using offset information. Also, as in the first and second examples, frequency hopping may be made possible in the same DL resource pool. Also, as in the second embodiment, it may be possible to configure whether or not to specify the number of repetitions by using one specific one bit and to transmit a signal corresponding to this.

As described above, according to the fourth example, the amount of uplink resource allocation information can be reduced, and the overhead of the downlink transmission can be reduced.

### (Fifth Example)

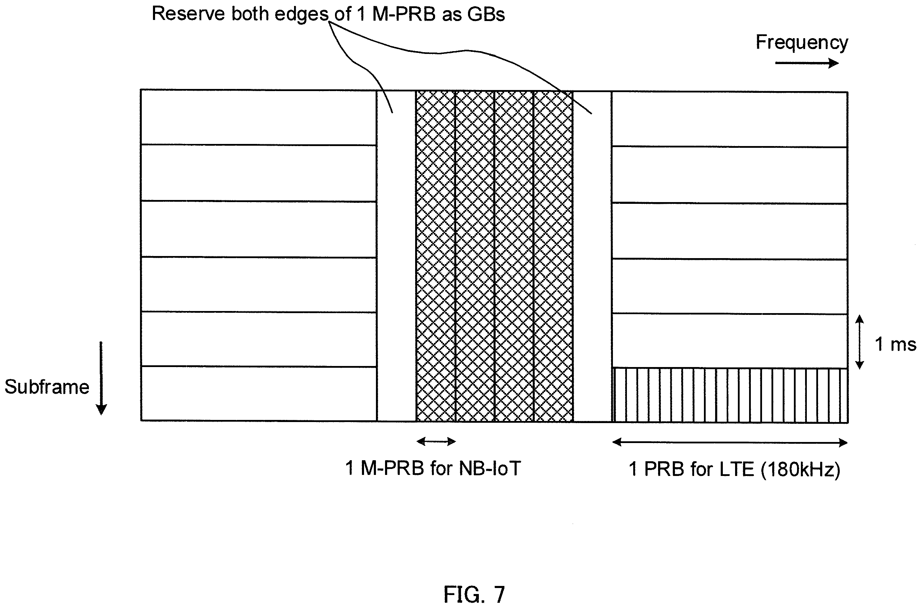

Next, a fifth embodiment will be described with reference to FIG. 7. The fifth example relates to uplink transmission, and, in particular, narrowband subcarriers that are extended in the time direction are allocated by shortening the subcarrier interval. In the central part of FIG. 7, M-PRBs, in which the subcarrier interval of 15 kHz is shortened to 2.5 kHz, are illustrated. Therefore, the narrowband subcarriers are multiplied 6-fold in the time direction. Incidentally, 1 PRB (180 kHz) of LTE is illustrated on the left and right sides of the center part of FIG. 7.

The narrow band subcarrier (1 M-PRB) is 2.5 kHz × 12 subcarriers, and which is 30 kHz. However, not all of these 6 M-PRBs are used, and the M-PRBs at both ends are used as guards as illustrated in FIG. 7. By this means, interference with adjacent radio resources can be reduced.

Since the M-PRBs at both ends are used as guards, the central 4 M-PRBs are used for allocating radio resources. In this case, in order to make it possible to use the four M-PRBs in any pattern, 3-bit information, which can specify 6 patterns, is used.

As described above, according to the fifth example, it is possible to use 1 M-PRB that is expanded in the time direction, effectively, by shortening the sub carrier interval.

### (Radio Communication System)

Now, the structure of the radio communication system according to an embodiment of the present invention will be described below. In this radio communication system, the radio communication methods according to the above-described embodiments of the present invention are employed. Here, although NB-IoT terminals will be explained as exemplary user terminals that are limited to using a narrow band (bandwidth reduced) as the band for their use, this is by no means limiting.

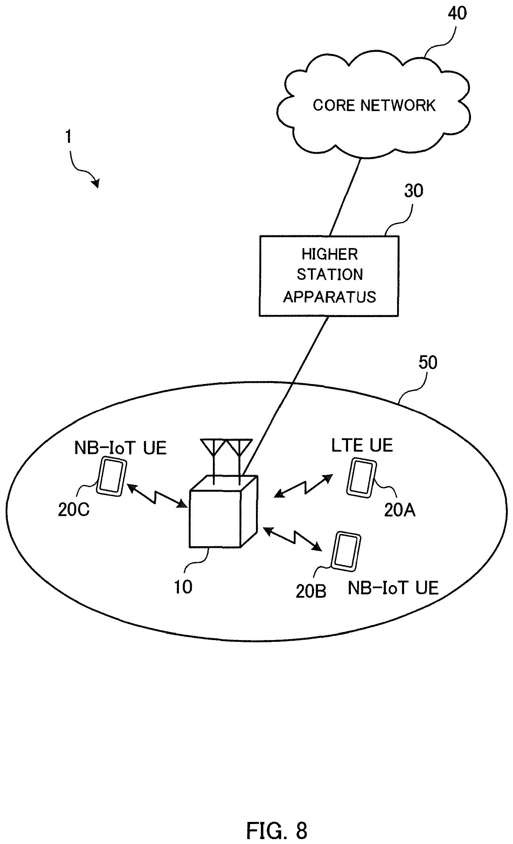

FIG. 8 is a diagram to illustrate a schematic structure of the radio communication system according to an embodiment of the present invention. The radio communication system 1 illustrated in FIG. 8 is an example of employing an LTE system in the network domain of a machine communication system. The radio communication system 1 can adopt carrier aggregation (CA) and/or dual connectivity (DC) to group a plurality of fundamental frequency blocks (component carriers) into one, where the system bandwidth of an LTE system constitutes one unit. Also, although it is assumed that the system band of this LTE system is configured to be minimum 1.4 MHz and maximum 20 MHz in both the downlink and the uplink, this configuration is by no means limiting.

Note that the radio communication system 1 may be referred to as "SUPER 3G," "LTE-A," (LTE-Advanced)," "IMT-Advanced," "4G" (4th generation mobile communication system), "5G" (5th generation mobile communication system), "FRA" (Future Radio Access) and so on.

The radio communication system 1 is comprised of a radio base station 10 and a plurality of user terminals 20A, 20B and 20C that are connected with the radio base station 10. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminals 20 (20A to 20C) can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are NB-IoT UEs that serve as communication devices in machine communication systems. Hereinafter the user terminals 20A, 20B and 20C will be simply referred to as "user terminals 20," unless specified otherwise.

The NB-IoT UEs 20B and 20C are terminals that are limited to using a narrow band (for example, 200 kHz), which is narrower than the minimum system bandwidth supported in existing LTE system, as the band for their use. Note that the NB-IoT UEs 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals 20 directly, or communicate with other user terminals 20 via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. The PUSCH may be referred to as an uplink data channel. User data and higher layer control information are communicated by the PUSCH. Also, downlink radio quality information (CQI: Channel Quality Indicator), delivery acknowledgment information (ACKs/NACKs) and so on are communicated by the PUCCH. By means of the PRACH, random access preambles for establishing connections with cells are communicated.

The channels for MTC terminals/NB-IoT UEs may be represented by affixing an "M," which stands for MTC, or an "N," which stands for NB-IoT, or an "NB," and, for example, an EPDCCH, a PDSCH, a PUCCH and a PUSCH for MTC terminals/NB-IoT UEs may be referred to as an "M-PDCCH," an "M-PDSCH," a "M-PUCCH," and an "M-PUSCH," respectively.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS: Positioning Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that, DMRSs may be referred to as "user terminal-specific reference signals" (UE-specific Reference Signals). Also, the reference signals to be communicated are by no means limited to these.

### (Radio base station)

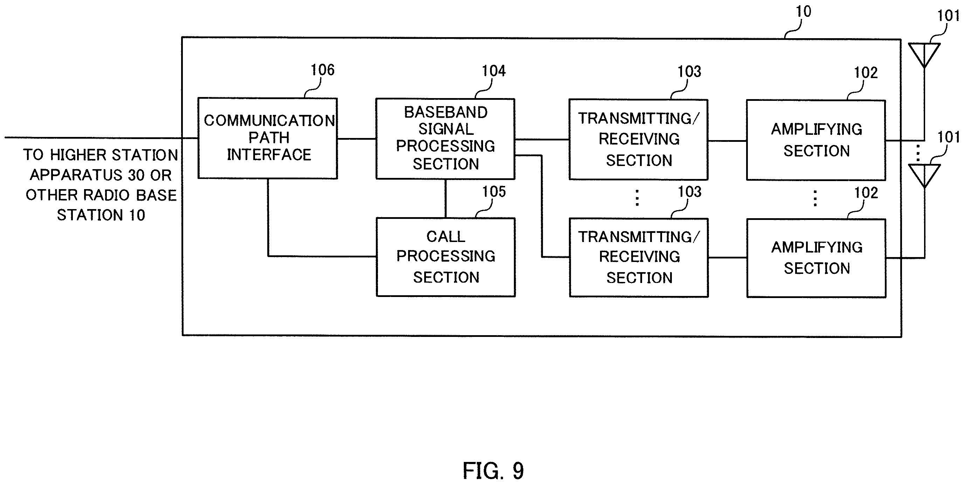

FIG. 9 is a diagram to illustrate an example of an overall structure of a radio base station according to an embodiment of the present invention. A radio base station 10 has a plurality of transmitting/receiving antennas 101, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

The radio frequency signals having been subjected to frequency conversion in the transmitting/receiving sections 103 are amplified in the amplifying sections 102, and transmitted from the transmitting/receiving antennas 101. The transmitting/receiving sections 103 can transmit and/or receive various signals in a narrow bandwidth (for example, 180 kHz) that is more limited than a system band (for example, one component carrier).

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a pre-determined interface. Also, the communication path interface 106 may transmit and receive signals (backhaul signaling) with other radio base stations 10 via an inter-base station interface (for example, an interface in compliance with the CPRI (Common Public Radio Interface) m such as optical fiber, the X2 interface).

The transmitting/receiving sections 103 transmit NB-SSs, reference signals, control signals, data signals to a user terminal 20 and so on in a narrow band. Also, the transmitting/receiving sections 103 can receive reference signals, control signals, data signals and so on from the user terminal 20 in a narrow band.

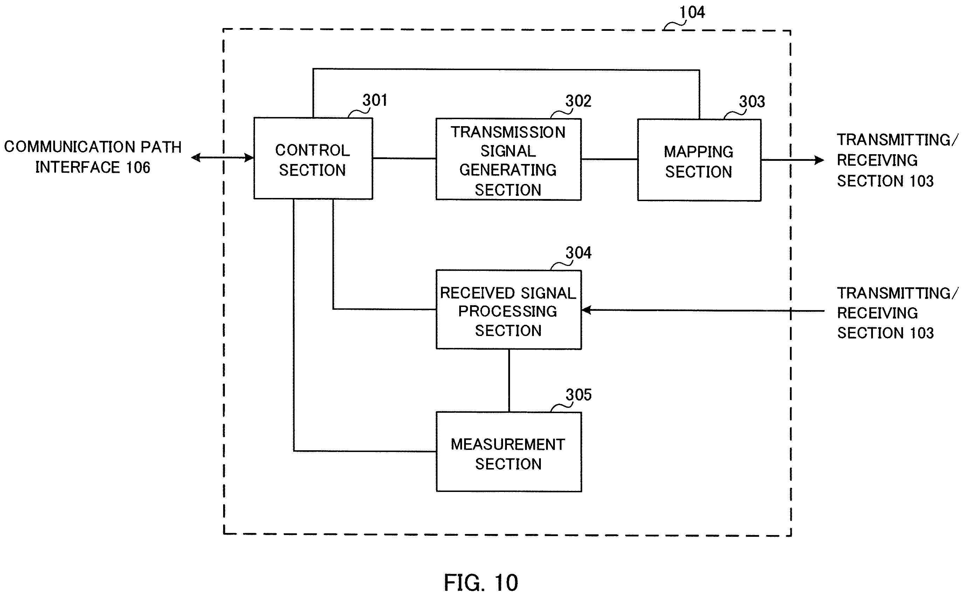

FIG. 10 is a diagram to illustrate an example of a functional structure of a radio base station according to one embodiment of the present invention. Note that, although FIG. 10 primarily illustrates functional blocks that pertain to characteristic parts of the present embodiment, the radio base station 10 has other functional blocks that are necessary for radio communication as well. As illustrated in FIG. 10, the baseband signal processing section 104 has a control section (scheduler) 301, a transmission signal generating section (generation section) 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and/or downlink control signals that are communicated in the PDCCH and/or the M-PDCCH. Also, the control section 301 controls the scheduling of synchronization signals (for example, the PSS (Primary Synchronization Signal)/SSS (Secondary Synchronization Signal), NB-SS, etc.), and downlink reference signals such as CRSs, CSI-RSs and DM-RSs.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

The control section 301 controls the transmission signal generating section 302 and the mapping section 303 to allocate various signals to narrow bands and transmit these to the user terminals 20. For example, the control section 301 controls downlink broadcast information (the MIB, SIBs (MTC-SIBs), etc.), the M-PDCCH, the PDSCH and so on to be transmitted in narrow bands. This narrow band (NB) is a band (for example, 180 kHz) that is narrower than the minimum system bandwidth (1.4 MHz) supported in existing LTE systems.

Also, the control section 301 determines the pattern (resource pool) to use for transmission and reception for signals for an NB-IoT UE from a plurality of patterns based on UE-specific information (user terminal-specific information), and controls the transmission signal generation section 302, the mapping section 303, and the reception signal processing section 304 so as to perform signal transmission and/or reception based on the determined pattern. The UE-specific information may be at least one of the random access channel resource and the user terminal ID (identification). When the UE-specific information is the user terminal ID, the control section 301 notifies the target NB-IoT UE of the user terminal ID. When the UE-specific information is the random access channel resource, and, for example, if it is the PRACH resource, this is already known in the NB-IoT UE, so no notification is sent.

Further, the control section 301 controls the transmission signal generating section 302, the mapping section 303 and the received signal processing section 304 to perform transmission and/or reception by using at least one of a downlink control channel, a downlink shared channel, and an uplink shared channel.

In addition, the control section 301 controls radio resource allocation according to the radio communication methods of the first example to the fifth example, and cooperates with the transmission signal generation section 302, the mapping section 303, and the reception signal processing section 304 to perform transmission and/or reception.

The transmission signal generating section 302 generates downlink signals (downlink control signals, downlink data signals, downlink reference signals and so on) based on instructions from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on instructions from the control section 301. Also, the downlink data signals are subjected to a coding process and a modulation process, based on coding rates and modulation schemes that are selected based on channel state information (CSI) from each user terminal 20 and so on.

The mapping section 303 maps the downlink signals generated in the transmission signal generating section 302 to pre-determined narrow band radio resources (for example, maximum 1 resource blocks) based on instructions from the control section 301, and outputs these to the transmitting/receiving sections 103. The mapping section 303 can be constituted by a mapper, a mapping circuit or a mapping device that can be described based on common understanding of the technical field to which the present invention pertains.

Further, the mapping section 303 maps signals based on the pattern determined by the control section 301. Specifically, the generated downlink signals are allocated to a plurality of radio resources constituting the pattern.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. Also, the received signal processing section 304 outputs the received signals, the signals after the receiving processes and so on, to the measurement section 305.

Also, the received signal processing section 304 processes the received signals based on the pattern determined by the control section 301. To be more specific, the received signal processing section 304 performs the receiving process of received signals allocated to a plurality of radio resources.

The measurement section 305 conducts measurements with respect to the received signals. The measurement section 305 can be constituted by a measurer, a measurement circuit or a measurement device that can be described based on common understanding of the technical field to which the present invention pertains.

The received signal processing section 304 may measure the signal received power (for example, RSRP (Reference Signal Received Power)), the received quality (for example, RSRQ (Reference Signal Received Quality)), channel states and so on. The measurement results may be output to the control section 301.

### (User terminal)

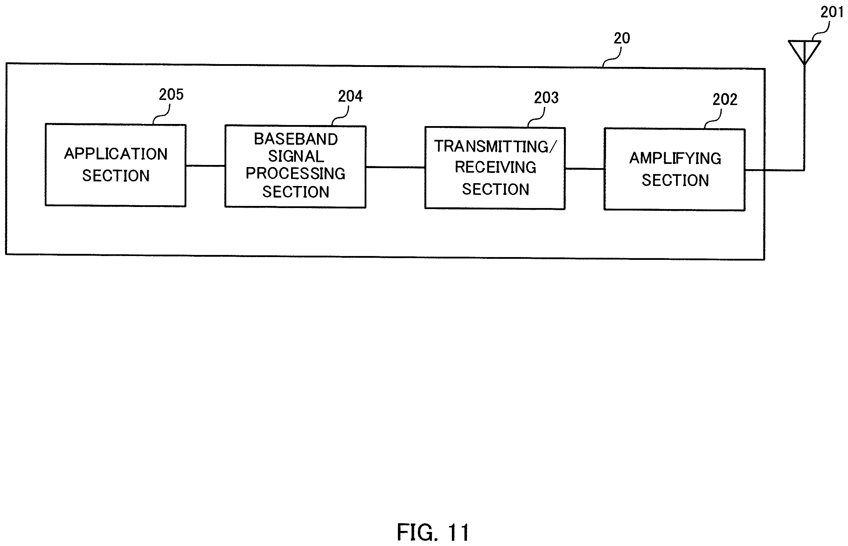

FIG. 11 is a diagram to illustrate an example of an overall structure of a user terminal according to one embodiment of the present invention. Note that, although not described in detail herein, normal LTE terminals may operate to act as NB-IoT terminals. A user terminal 20 has a transmitting/receiving antenna 201, an amplifying section 202, a transmitting/receiving section 203, a baseband signal processing section 204 and an application section 205. Also, the user terminal 20 may have a plurality of transmitting/receiving antennas 201, amplifying sections 202, transmitting/receiving sections 203 and/or others.

A radio frequency signal that is received in the transmitting/receiving antenna 201 is amplified in the amplifying section 202. The transmitting/receiving section 203 receives the downlink signal amplified in the amplifying section 202.

The received signals are subjected to frequency conversion and converted into the baseband signal in the transmitting/receiving section 203, and output to the baseband signal processing section 204. The transmitting/receiving section 203 can be constituted by a transmitters/receiver, a transmitting/receiving circuit or a transmitting/receiving device that can be described based on common understanding of the technical field to which the present invention pertains. Note that the transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203.

The baseband signal that is output from the baseband signal processing section 204 is converted into a radio frequency band in the transmitting/receiving section 203. The radio frequency signal that is subjected to frequency conversion in the transmitting/receiving section 203 is amplified in the amplifying section 202, and transmitted from the transmitting/receiving antenna 201.

The transmitting/receiving section 203 receives NB-SSs, reference signals, control signals, data signals and so on from the radio base station 10 in a narrow band. Also, the transmitting/receiving section 203 transmits reference signals, control signals, data signals and so on to the radio base station 10 in a narrow band.

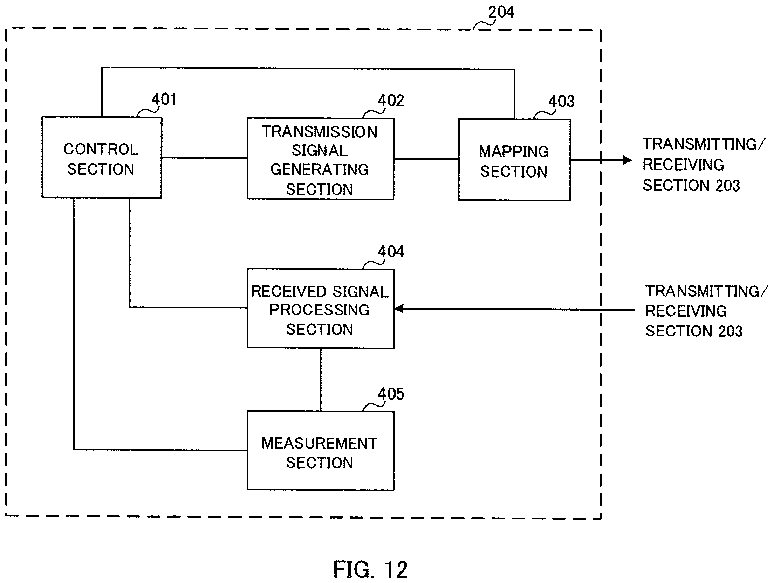

FIG. 12 is a diagram to illustrate an example of a functional structure of a user terminal according to one embodiment of the present invention. Note that, although FIG. 12 primarily illustrates functional blocks that pertain to characteristic parts of the present embodiment, the user terminal 20 has other functional blocks that are necessary for radio communication as well. As illustrated in FIG. 12, the baseband signal processing section 204 provided in the user terminal 20 is comprised at least of a control section 401, a transmission signal generating section (generation section) 402, a mapping section 403, a received signal processing section 404 and a measurement section 405.

The control section 401 controls the whole of the user terminal 20. For the control section 401, a controller, a control circuit or a control device that can be described based on common understanding of the technical field to which the present invention pertains can be used.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in PDCCH/M-PDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

Also, the control section 401 determines a pattern from a plurality of patterns based on user terminal unique information, and controls the transmission signal generation section 402, the mapping section 403 and the received signal processing section 404 so that signals are transmitted and/or received based on this pattern. The user terminal-specific information may be at least one of the random access channel resources and the user terminal ID (identification). The control section 401 controls the transmission signal generation section 402, the mapping section 403 and the received signal processing section 404 so that transmission and/or reception are performed using at least one of a downlink control channel, a downlink shared channel and an uplink shared channel, in radio resources corresponding to the pattern.

Further, the control section 401 may specify a plurality of patterns based on cell-specific information. For the cell-specific information, at least one of SIBs (System Information Blocks), cell IDs (identification) and subframe numbers can be used.

Also, the control section 401 may determine a pattern based on the pattern offset information and the cell-specific information. In the pattern, the radio resources may be frequency-hopped between different narrow bands, and the number of these multiple patterns may be equal to the number of different narrow bands.

Further, the control section 401 controls radio resource allocation according to the radio communication method of the first example to the fifth example, and cooperates with the transmission signal generation section 402, the mapping section 403, and the reception signal processing section 404 to perform transmission and/or reception.

The transmission signal generating section 402 generates uplink signals (uplink control signals, uplink data signals, uplink reference signals and so on) based on instructions from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission information generating section 402 generates uplink control signals such as delivery acknowledgement signals (HARQ-ACKs), channel state information (CSI) and so on, based on instructions from the control section 401. Also, the transmission signal generating section 402 generates uplink data signals based on instructions from the control section 401. For example, when a UL grant is included in a downlink control signal that is reported from the radio base station 10, the control section 401 controls the transmission signal generating section 402 to generate an uplink data signal.

The mapping section 403 maps the uplink signals generated in the transmission signal generating section 402 to radio resources (for example, maximum one resource blocks) based on instructions from the control section 401, and outputs these to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

### (Hardware structure)

Note that the block diagrams that have been used to describe the above embodiments illustrate blocks in functional units. These functional blocks (components) may be implemented in arbitrary combinations of hardware and/or software. Also, the means for implementing each functional block is not particularly limited. That is, each functional block may be implemented with one physically-integrated device, or may be implemented by connecting two physically-separate devices via radio or wire and using these multiple devices.

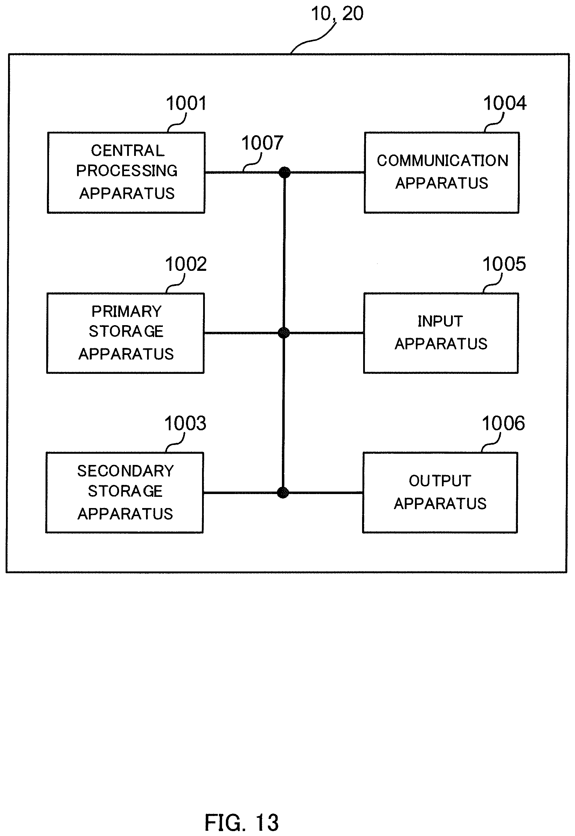

That is, a radio base station, a user terminal and so on according to an embodiment of the present invention may function as a computer that executes the processes of the radio communication method of the present invention. FIG. 13 is a diagram to illustrate an example hardware structure of a radio base station and a user terminal according to an embodiment of the present invention. Physically, a radio base station 10 and a user terminal 20, which have been described above, may be formed as a computer apparatus that includes a central processing apparatus (processor) 1001, a primary storage apparatus (memory) 1002, a secondary storage apparatus 1003, a communication apparatus 1004, an input apparatus 1005, an output apparatus 1006 and a bus 1007. Note that, in the following description, the word "apparatus" may be replaced by "circuit," "device," "unit" and so on.

Each function of the radio base station 10 and user terminal 20 is implemented by reading predetermined software (programs) on hardware such as the central processing apparatus 1001, the primary storage apparatus 1002 and so on, and controlling the calculations in the central processing apparatus 1001, the communication in the communication apparatus 1004, and the reading and/or writing of data in the primary storage apparatus 1002 and the secondary storage apparatus 1003.

The central processing apparatus 1001 may control the whole computer by, for example, running an operating system. The central processing apparatus 1001 may be formed with a processor (CPU: Central Processing Unit) that includes a control apparatus, a calculation apparatus, a register, interfaces with peripheral apparatus, and so on. For example, the above-described baseband signal process section 104 (204), call processing section 105 and so on may be implemented by the central processing apparatus 1001.

Also, the central processing apparatus 1001 reads programs, software modules, data and so on from the secondary storage apparatus 1003 and/or the communication apparatus 1004, into the primary storage apparatus 1002, and executes various processes in accordance with these. As for the programs, programs to allow the computer to execute at least part of the operations of the above-described embodiments may be used. For example, the control section 401 of the user terminal 20 may be stored in the primary storage apparatus 1002 and implemented by a control program that runs on the central processing apparatus 1001, and other functional blocks may be implemented likewise.

The primary storage apparatus (memory) 1002 is a computer-readable recording medium, and may be constituted by, for example, at least one of a ROM (Read Only Memory), an EPROM (Erasable Programmable ROM), a RAM (Random Access Memory) and so on. The secondary storage apparatus 1003 is a computer-readable recording medium, and may be constituted by, for example, at least one of a flexible disk, an opto-magnetic disk, a CD-ROM (Compact Disc ROM), a hard disk drive and so on.

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for allowing sending output to the outside (for example, a display, a speaker, etc.). Note that the input apparatus 1005 and the output apparatus 1006 may be provided in an integrated structure (for example, a touch panel).

Also, the apparatuses, including the central processing apparatus 1001, the primary storage apparatus 1002 and so on, may be connected via a bus 1007 to communicate information with each other. The bus 1007 may be formed with a single bus, or may be formed with buses that vary between the apparatuses. Note that the hardware structure of the radio base station 10 and the user terminal 20 may be designed to include one or more of each apparatus illustrated in the drawings, or may be designed not to include part of the apparatuses.

For example, the radio base station 10 and the user terminal 20 may be structured to include hardware such as an ASIC (Application-Specific Integrated Circuit), a PLD (Programmable Logic Device), an FPGA (Field Programmable Gate Array) and so on, and part or all of the functional blocks may be implemented by the hardware.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "cells," "frequency carriers," "carrier frequencies" and so on.

Also, the information and parameters described in this description may be represented in absolute values or in relative values with respect to a pre-determined value, or may be represented in other information formats. For example, radio resources may be specified by predetermined indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

Also, software and instructions may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

The examples/embodiments illustrated in this description may be used individually or in combinations, and the mode of may be switched depending on the implementation. Also, a report of pre-determined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Block) and SIBs (System Information Blocks)) and MAC (Medium Access Control) signaling and so on), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-218000, filed on November 5, 2015, including the specification, drawings and abstract, is incorporated herein by reference in its entirety.

## Claims

1. A user terminal comprising:
a transmitting/receiving section that transmits and receives signals to and from a radio base station based on a pattern that is comprised of a plurality of radio resources; and
a control section that determines the pattern from a plurality of patterns based on user terminal-specific information.

2. The user terminal according to claim 1, wherein the user terminal-specific information is at least one of a random access channel resource and a user terminal ID (identification).

3. The user terminal according to claim 1 or claim 2, wherein the control section specifies the plurality of patterns based on cell-specific information.

4. The user terminal according to claim 3, wherein the cell-specific information is at least one of an SIB (System Information Block), a cell ID (identification) and a subframe number.

5. The user terminal according to claim 1 or claim 2, wherein the control section determines the pattern based on pattern offset information and cell-specific information.

6. The user terminal according to one of claim 1 to claim 5, wherein the transmitting/receiving section performs transmission and/or reception, in radio resources corresponding to the pattern, by using at least one of a downlink control channel, a downlink shared channel and an uplink shared channel.

7. The user terminal according to claim 1, wherein, in the pattern, the radio resources are frequency-hopped between different narrow bands.

8. The user terminal according to claim 7, wherein the number the plurality of patterns and the number of the different narrow bands are equal.

9. A radio base station comprising:
a transmitting/receiving section that transmits and receives signals to and from a user terminal, based on a pattern comprised of a plurality of radio resources; and
a control section that determines the pattern from a plurality of patterns based on user terminal-specific information.

10. A radio communication method in a user terminal, comprising the steps of:
transmitting and receiving signals to and from a radio base station based on a pattern that is comprised of a plurality of radio resources; and
determining the pattern from a plurality of patterns based on user terminal-specific information.
